# EUROPEAN PATENT SPECIFICATION

(11) **EP 4 155 059 B1**
(45) Date of publication and mention of the grant of the patent: **05.11.2025**
(21) Application number: 22197100.5
(22) Date of filing: 22.09.2022
(51) Int. Cl.: B29C 65/56, B29C 65/44, B29C 65/64, B29C 45/14, B29C 37/00, B29C 70/68, B29K 23/00, B29K 69/00, B29K 77/00, B29K 705/00, B29K 705/02, B29K 705/10, B29K 705/12

(54) **METHOD FOR JOINING DISSIMILAR MATERIALS AND JOINT OF DISSIMILAR MATERIALS**
VERFAHREN ZUM VERBINDEN UNTERSCHIEDLICHER MATERIALIEN UND VERBINDUNG UNTERSCHIEDLICHER MATERIALIEN
PROCÉDÉ D'ASSEMBLAGE DE MATÉRIAUX DISSEMBLABLES ET ASSEMBLAGE DE MATÉRIAUX DISSEMBLABLES

(30) Priority: 24.09.2021 JP 2021155847
(43) Date of publication of application: 29.03.2023
(73) Proprietor: DAIHEN Corporation, Yodogawa-ku Osaka-shi, Osaka 532-8512 (JP)
(72) Inventor: Ueyama, Tomoyuki, Osaka-shi, Osaka, 532-8512 (JP); Miyauchi, Takaaki, Osaka-shi, Osaka, 532-8512 (JP)
(74) Representative: Hoffmann Eitle

(56) References cited:
- WO-A1-2016/082653
- JP-A- 2009 051 131
- JP-A- 2009 226 643
- US-A1- 2019 240 877

## Description

### BACKGROUND OF THE INVENTION

### Field of the Invention

The present invention relates to a method for joining dissimilar materials and a joint of dissimilar materials.

### Description of the Background Art

JP 2009 226643 A relates to providing a bonding method by which stable bonding strength can be obtained.

US 2019/0240877 A1 relates to a method for attaching two window components, wherein cavities are engraved in a first window component using laser and wherein a portion of a second window component made of thermoplastic is melted using laser so that it flows into the cavities of the first window component, solidifies and anchor thereto.

WO 2016/082653 A1 relates to a metal-resin composite and a method for preparing a metal-resin composite.

Japanese Patent No. 4020957 is a prior art document disclosing a method for machining a metal material having a joining part with a dissimilar material using a laser. Under the method for machining a metal material having a joining part with a dissimilar material using a laser disclosed in Japanese Patent No. 4020957, the joining part for joining with the dissimilar material is formed by laser scanning a metal surface in a scanning direction and another scanning direction crossing the scanning direction. The dissimilar material is joined to the metal surface subjected to laser scanning.

### SUMMARY OF THE INVENTION

When a surface of one of dissimilar materials is irradiated with laser light in one irradiation direction to join the dissimilar materials using the surface irradiated with the laser light, a joint strength between the dissimilar materials against a load of separating the dissimilar materials in a low-strength direction along the one irradiation direction is low, and the dissimilar materials joined to each other are easily separated.

The present invention has been made to solve the above-described problems, and it is therefore an object of the present invention to provide a method for joining dissimilar materials and a joint of dissimilar materials that can eliminate a low-strength direction in which a joint strength between dissimilar materials joined to each other is low to suppress separation of the dissimilar materials.

A method for joining dissimilar materials according to an aspect of the present invention includes forming a first recess and a second recess by irradiating a surface of a first member with laser light, the first recess and the second recess being cut into the surface obliquely at angles different from each other, and joining a second member to the surface of the first member with a part of the second member engaging with each of the first recess and the second recess by melting the part of the second member lower in melting point than the first member to cause the part of the second member to flow into each of the first recess and the second recess and solidifying the part of the second member; wherein:
at least one of the first recess and second recess is formed in a linear shape in the surface, each of the first and second recess having a tip, and a joining part is formed at the respective tips, in the cutting direction, of the first recess and second recess, the joining part causing the first recess and second recess to communicate with each other; and
the first recess and the second recess are formed so as to be spaced apart from each other relative to a virtual plane perpendicular to the surface of the first member.

Causing the part of the second member to engage with each of the first recess and the second recess cut into the surface of the first member obliquely at angles different from each other makes it possible to eliminate a low-strength direction in which a joint strength between the first member and the second member joined to each other is low to suppress separation of the first member and the second member.

According to the present invention, at least one of the first recess and the second recess is formed in a linear shape in the surface.

This can make the joint strength between the first member and the second member higher to suppress separation of the first member and the second member.

According to an aspect helpful for understanding the present invention, at least one of the first recess and the second recess is formed in a spot shape.

This allows a reduction in energy required for irradiation with laser light.

According to another aspect of the present invention, the first member is formed of a metal material, and the second member is formed of a resin material.

In this case, the metal material and the resin material can be joined to each other as dissimilar materials.

A joint of dissimilar materials according to an aspect of the present invention includes a first member and a second member. The first member has a first recess and a second recess cut into a surface of the first member obliquely at angles different from each other. The second member is lower in melting point than the first member and joined to the surface of the first member. A part of the second member flows into each of the first recess and the second recess to engage with each of the first recess and the second recess.

Causing the part of the second member to engage with each of the first recess and the second recess cut into the surface of the first member obliquely at angles different from each other makes it possible to eliminate a low-strength direction in which a joint strength between the first member and the second member joined to each other is low to suppress separation of the first member and the second member.

The foregoing and other objects, features, aspects, and advantages of the present invention will become more apparent from the following detailed description of the present invention when taken in conjunction with the accompanying drawings.

### BRIEF DESCRIPTION OF THE DRAWINGS

Fig. 1 is a perspective view of a configuration of a joint of dissimilar materials according to a first embodiment, which is helpful for understanding the present invention.
Fig. 2 is a cross-sectional view of the joint illustrated in Fig. 1 when viewed in the direction of a II-II arrow.
Fig. 3 is a cross-sectional view of a first member, illustrating a state where the first member is irradiated with laser light to form a first recess and a second recess under a method for joining dissimilar materials according to the first embodiment.
Fig. 4 is a cross-sectional view of a configuration of a joint of dissimilar materials according to the present invention (a first modification of the first embodiment).
Fig. 5 is a cross-sectional view of a configuration of a joint of dissimilar materials according to a second modification of the first embodiment, which is helpful for understanding the present invention.
Fig. 6 is a perspective view of a configuration of a joint of dissimilar materials according to a second embodiment, which is helpful for understanding the present invention.
Fig. 7 is a top view of a configuration of a first member of a joint of dissimilar materials according to a third embodiment, which is helpful for understanding the present invention.

### DESCRIPTION OF THE PREFERRED EMBODIMENTS

Hereinafter, a method for joining dissimilar materials and a joint of dissimilar materials according to each embodiment of the present invention will be described with reference to the drawings. In the following description of the embodiments, the same or corresponding parts in the drawings are denoted by the same reference numerals to avoid the description from being redundant.

In the drawings, a direction parallel to a surface of a first member is defined as an X direction, a direction orthogonal to the X direction on the surface of the first member is defined as a Y direction, and a direction orthogonal to the surface of the first member is defined as a Z direction.

### (First Embodiment - helpful for understanding the present invention)

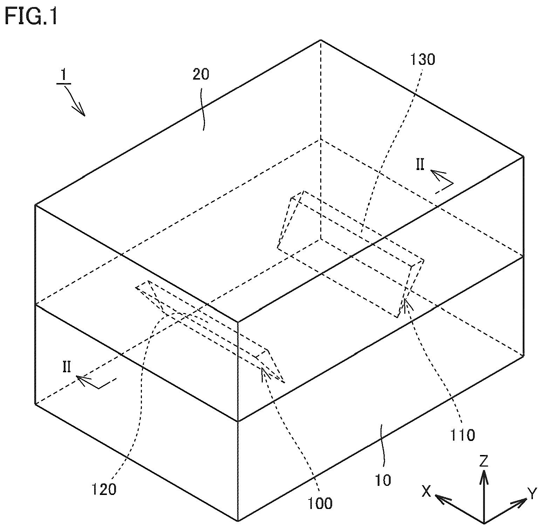

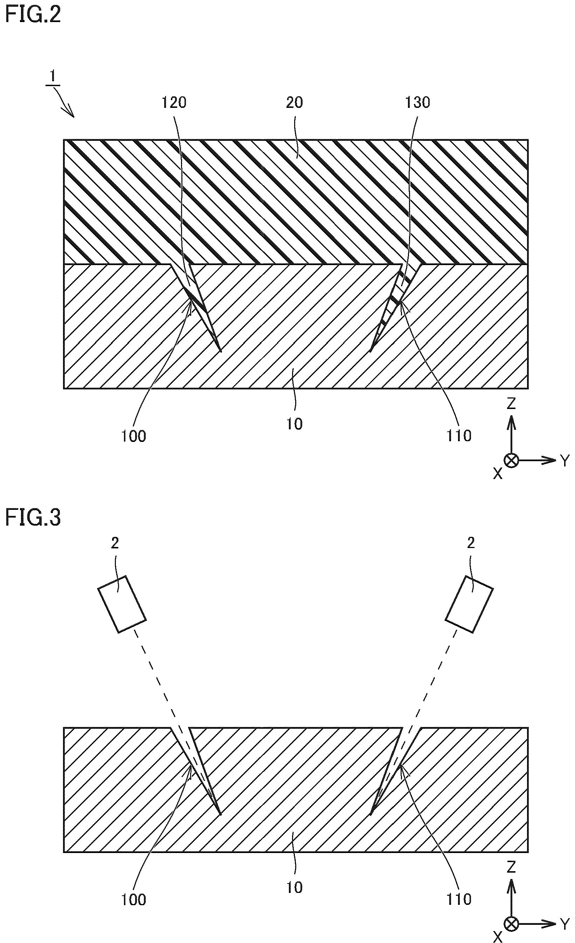

Fig. 1 is a perspective view of a configuration of a joint of dissimilar materials according to a first embodiment, helpful for understanding the present invention. Fig. 2 is a cross-sectional view of the joint illustrated in Fig. 1 when viewed in the direction of a II-II arrow.

As illustrated in Figs. 1 and 2, a joint 1 of dissimilar materials according to the first embodiment includes a first member 10 and a second member 20.

According to the present embodiment, first member 10 has an approximately rectangular parallelepiped shape. The shape of first member 10, however, is not limited to the rectangular parallelepiped shape.

First member 10 is formed of a metal material. The material of first member 10 is, for example, aluminum. Note that the material of first member 10 is not limited to aluminum and may be a metal material such as iron or copper. Furthermore, first member 10 is not limited to a metal material as long as laser machining can be performed, and may be a resin material, ceramics, or the like.

First member 10 has a first recess 100 and a second recess 110 cut into the surface of first member 10 obliquely at angles different from each other. According to the present embodiment, first recess 100 and second recess 110 are formed so as to come closer to each other as being away from the surface (XY plane) of first member 10. That is, first recess 100 and second recess 110 are formed so as to be spaced apart from each other relative to a virtual plane (XZ plane) perpendicular to the surface of first member 10 and to come closer to each other at their tip sides in a cutting direction. For example, first recess 100 and second recess 110 may be formed plane-symmetrically with respect to the virtual plane (XZ plane).

First recess 100 and second recess 110 according to the present embodiment are each formed extending in, for example, an oblique direction intersecting the surface of first member 10 at an angle in a range of greater than or equal to 60° and less than or equal to 80° when viewed in the X direction. The angles at which first recess 100 and second recess 110 intersect the surface of first member 10 only need to be different from each other, and are not limited to being within the above-described range of greater than or equal to 60° and less than or equal to 80°. Note that, according to the present embodiment, one first recess 100 and one second recess 110 are formed in the surface of first member 10, but at least one of first recess 100 and second recess 110 may be formed at a plurality places. Further, in the surface of first member 10, a recess may be formed by cutting the surface at an angle different from the angles of first recess 100 and second recess 110.

At least one of first recess 100 and second recess 110 may be formed in a linear shape in the surface of first member 10. According to the present embodiment, first recess 100 and second recess 110 are each formed in a linear shape extending in the X direction in the surface of first member 10. Note that, according to the present embodiment, first recess 100 and second recess 110 are each formed in a linear shape in the surface of first member 10, but may be formed in a curved shape.

According to the present embodiment, second member 20 has an approximately rectangular parallelepiped shape. The shape of second member 20, however, is not limited to a rectangular parallelepiped shape.

Second member 20 is made of a material lower in melting point than first member 10. According to the present embodiment, second member 20 is made of a resin material. Second member 20 is made of, for example, polypropylene. Note that the material of second member 20 is not limited to polypropylene, and may be a resin material such as polycarbonate or polyamide. Furthermore, the material of second member 20 is not limited to a resin material and may be a metal material. Second member 20 is lower in melting point than first member 10 by, for example, at least 100°C.

Second member 20 is adjacent to first member 10 in the Z direction. Second member 20 is joined to the surface of first member 10.

Second member 20 partially flows into each of first recess 100 and second recess 110 to engage with each of first recess 100 and second recess 110. Specifically, a first projection 120 and a second projection 130 are formed on second member 20. First projection 120 is formed to adapt to an internal shape of first recess 100 and engages with first recess 100. Second projection 130 is formed to adapt to an internal shape of second recess 110 and engages with second recess 110.

A method for joining dissimilar materials according to the first embodiment will be now described. Fig. 3 is a cross-sectional view of the first member, illustrating a state where the first member is irradiated with laser light to form the first recess and the second recess under the method for joining dissimilar materials according to the first embodiment.

As illustrated in Fig. 3, under the method for joining dissimilar materials according to the first embodiment, first, the surface of first member 10 is irradiated with laser light to form first recess 100 and second recess 110, first recess 100 and second recess 110 being cut into the surface of first member 10 obliquely at angles different from each other.

According to the present embodiment, first recess 100 and second recess 110 are each formed by irradiation of the surface of first member 10 with laser light emitted from a laser oscillator 2. The laser light is emitted from laser oscillator 2 obliquely to the surface of first member 10. Note that first recess 100 and second recess 110 may be formed by one pulse irradiation with laser light, may be formed by a plurality of times of pulse irradiation with laser light, or may be formed by continuous irradiation with laser light. Various conditions such as the power of the laser light emitted from laser oscillator 2 are suitably adjusted to material characteristics of first member 10.

Next, as illustrated in Fig. 2, a part of second member 20 is melted to flow into each of first recess 100 and second recess 110 and then solidify, thereby causing second member 20 to join to the surface of first member 10 with the part of second member 20 engaging with each of first recess 100 and second recess 110.

The part of second member 20 is melted to flow into each of first recess 100 and second recess 110 and then solidify by injection molding, for example. The method by which second member 20 is melted to flow, however, is not limited to injection molding, and may be a method by which heat is applied to second member 20 through first member 10 to melt the part of second member 20 in contact with first member 10.

With the first recess and the second recess cut into the surface of first member 10 in the same direction perpendicular or oblique to the surface of first member 10, when a load of separating first member 10 and second member 20 is applied in the direction in which the first recess and second recess are cut, the first projection easily separates from the first recess, the second projection easily separates from the second recess, and the joint between the first member and the second member becomes significantly weak accordingly. That is, when the first recess and the second recess are cut into the surface of first member 10 in the same direction perpendicular or oblique to the surface of first member 10, the joint strength against the load of separating the first member and the second member in the low-strength direction along the direction is significantly reduced, and first member 10 and second member 20 easily separate from each other accordingly.

On the other hand, according to the present embodiment, even when the load of separating first member 10 and second member 20 is applied in a direction in which first recess 100 is cut, second projection 130 does not easily separate from second recess 110 cut at an angle different from first recess 100, so that the joint strength between first member 10 and second member 20 can be made higher. Further, even when the load of separating first member 10 and second member 20 is applied in a direction in which second recess 110 is cut, first projection 120 does not easily separate from first recess 100 cut at an angle different from second recess 110, so that the joint strength between first member 10 and second member 20 can be made higher. As described above, according to the present embodiment, the low-strength direction in which the joint strength between first member 10 and second member 20 joined to each other is low can be eliminated to suppress separation of first member 10 and second member 20.

The method for joining dissimilar materials and joint 1 of dissimilar materials according to the first embodiment can suppress separation of the dissimilar materials by causing the part of second member 20 to engage with each of first recess 100 and second recess 110 cut into the surface of first member 10 obliquely at angles different from each other to eliminate the low-strength direction in which the joint strength between the dissimilar materials joined to each other is low.

The method for joining dissimilar materials and joint 1 of dissimilar materials according to the first embodiment can suppress separation of first member 10 and second member 20 by forming at least one of first recess 100 and second recess 110 in a linear shape in the surface of first member 10 to increasing the joint strength between first member 10 and second member 20.

The method for joining dissimilar materials and joint 1 of dissimilar materials according to the first embodiment can join, with first member 10 formed of a metal material, and second member 20 formed of a resin material, the metal material and the resin material as dissimilar materials.

Hereinafter, a method for joining dissimilar materials and a joint of dissimilar materials according to the present invention (a modification of the first embodiment) will be described with reference to the drawings. The method for joining dissimilar materials and the joint of dissimilar materials according to the present modification are different from the method for joining dissimilar materials and joint 1 of dissimilar materials according to the first embodiment only in configuration of the first recess and in configuration of the second recess, so that no description will be given below of the same configurations as in the method for joining dissimilar materials and joint 1 of dissimilar materials according to the first embodiment.

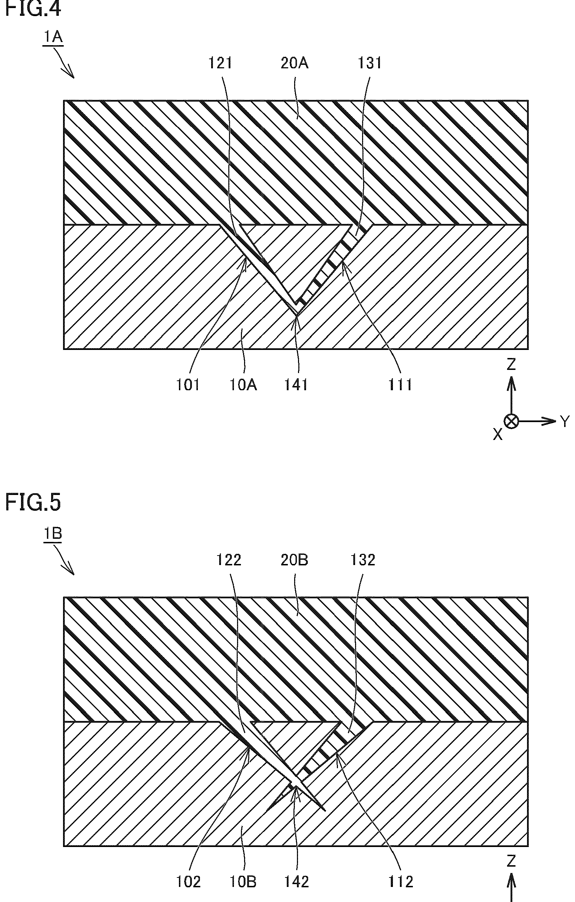

Fig. 4 is a cross-sectional view of a configuration of a joint of dissimilar materials according to the present invention (a first modification of the first embodiment). As illustrated in Fig. 4, a joint 1A of dissimilar materials according to the present invention (the first modification of the first embodiment) includes a first member 10A and a second member 20A.

First member 10A has a first recess 101 and a second recess 111 cut into the surface of first member 10A obliquely at angles different from each other. According to the present modification, a joining part 141 is formed at their respective tips, in the cutting direction, of first recess 101 and second recess 111. Joining part 141 causes first recess 101 and second recess 111 to communicate with each other.

A part of second member 20A flows into each of first recess 101 and second recess 111 to engage with each of first recess 101 and second recess 111. Specifically, a first projection 121 and a second projection 131 are formed on second member 20A. First projection 121 engages with first recess 101, and second projection 131 engages with second recess 111. First projection 121 and second projection 131 are joined at joining part 141.

The method for joining dissimilar materials and joint 1A of dissimilar materials according to the present invention (first modification of the first embodiment) can suppress separation of the dissimilar materials by joining, at joining part 141, first projection 121 and second projection 131, each of which being a part of second member 20A, and causing the part of second member 20A to engage with each of first recess 101 and second recess 111 to eliminate the low-strength direction in which the joint strength between the dissimilar materials joined to each other is low and increase the joint strength between the dissimilar materials.

Fig. 5 is a cross-sectional view of a configuration of a joint of dissimilar materials according to a second modification of the first embodiment, which is useful for understanding the present invention. As illustrated in Fig. 5, a joint 1B of dissimilar materials according to the second modification of the first embodiment includes a first member 10B and a second member 20B.

First member 10B has a first recess 102 and a second recess 112 cut into the surface of first member 10B obliquely at angles different from each other. According to the present modification, first recess 102 and second recess 112 intersect each other to form a joining part 142 at the intersection. Joining part 142 causes first recess 102 and second recess 112 to communicate with each other.

A part of second member 20B flows into each of first recess 102 and second recess 112 to engage with each of first recess 102 and second recess 112. Specifically, a first projection 122 and a second projection 132 are formed on second member 20B. First projection 122 engages with first recess 102, and second projection 132 engages with second recess 112. First projection 122 and second projection 132 are joined at joining part 142.

The method for joining dissimilar materials and joint 1B of dissimilar materials according to the second modification of the first embodiment can suppress separation of the dissimilar materials by joining, at joining part 142, first projection 122 and second projection 132, each of which being a part of second member 20B, and causing the part of second member 20B to engage with each of first recess 102 and second recess 112 to eliminate the low-strength direction in which the joint strength between the dissimilar materials joined to each other is low and increase the joint strength between the dissimilar materials.

### (Second Embodiment - useful for understanding the present invention)

Hereinafter, a method for joining dissimilar materials and a joint of dissimilar materials according to a second embodiment, which is useful for understanding the present invention, will be described with reference to the drawings. The method for joining dissimilar materials and the joint of dissimilar materials according to the second embodiment are different from the method for joining dissimilar materials and joint 1 of dissimilar materials according to the first embodiment only in configuration of the first recess and in configuration of the second recess, so that no description will be given below of the same configurations as in the method for joining dissimilar materials and joint 1 of dissimilar materials according to the first embodiment.

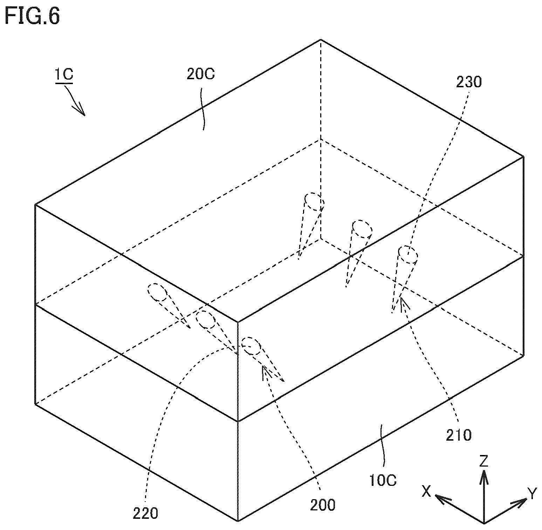

Fig. 6 is a perspective view of a configuration of the joint of dissimilar materials according to the second embodiment, useful for understanding the present invention. As illustrated in Fig. 6, a joint 1C of dissimilar materials according to the second embodiment (useful for understanding the present invention) includes a first member 10C and a second member 20C.

First member 10C has a first recess 200 and a second recess 210 cut into the surface of first member 10C obliquely at angles different from each other. At least one of first recess 200 and second recess 210 is formed in a spot shape. According to the present embodiment, first recess 200 and second recess 210 are each formed in a spot shape. A plurality of first recesses 200 and a plurality of second recesses 210 are arranged side by side in the X direction.

A part of second member 20C flows into each of first recess 200 and second recess 210 to engage with each of first recess 200 and second recess 210. Specifically, a first projection 220 and a second projection 230 are formed on second member 20C. First projection 220 engages with first recess 200, and second projection 230 engages with second recess 210.

The method for joining dissimilar materials and joint 1C of dissimilar materials according to the second embodiment (useful for understanding the present invention) can reduce energy required for irradiation with laser light by forming at least one of first recess 200 and second recess 210 in a spot shape as compared with a case where the first recess and the second recess are each formed in a linear shape.

### (Third Embodiment - useful for understanding the present invention)

Hereinafter, a method for joining dissimilar materials and a joint of dissimilar materials according to a third embodiment, which is useful for understanding the present invention, will be described with reference to the drawings. The method for joining dissimilar materials and the joint of dissimilar materials according to the third embodiment are different from the method for joining dissimilar materials and joint 1 of dissimilar materials according to the first embodiment mainly in configuration of the first member, so that no description will be given below of the same configurations as in the method for joining dissimilar materials and joint 1 of dissimilar materials according to the first embodiment.

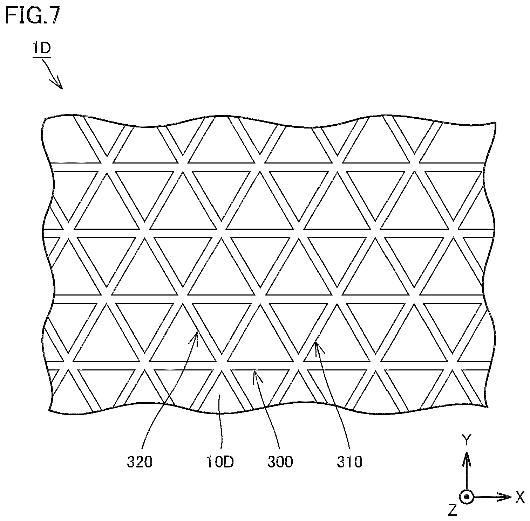

Fig. 7 is a top view of a configuration of the first member of the joint of dissimilar materials according to the third embodiment, which is useful for understanding the present invention. Note that Fig. 7 illustrates a second member in a see-through manner for easy understanding.

As illustrated in Fig. 7, a joint 1D of dissimilar materials according to the third embodiment includes a first member 10D and the second member.

First member 10D has a first recess 300, a second recess 310, and a third recess 320 cut into the surface of first member 10D obliquely at angles different from each other. First recess 300, second recess 310, and third recess 320 linearly extend to intersect each other at an angle of about 60° on the XY plane. As a result, a plurality of triangles surrounded by first recess 300, second recess 310, and third recess 320 are formed in the surface of first member 10D. Their respective tips, in the cutting direction, of first recess 300, second recess 310, and third recess 320 are located inside the triangles when viewed in the Z direction. That is, first recess 300, second recess 310, and third recess 320 are each formed extending along a corresponding peripheral surface of each triangular frustum.

Note that, according to the present embodiment, first recess 300, second recess 310, and third recess 320 are configured to form a plurality of triangular shapes in the surface of first member 10D, but the present disclosure is not limited to such a configuration, and at least four types of recesses may be cut into the surface of first member 10D obliquely at angles different from each other to form polygons each having four sides or more in the surface of first member 10D.

The method for joining dissimilar materials and joint 1D of dissimilar materials according to the third embodiment (useful for understanding the present invention) can suppress separation of the dissimilar materials by forming polygons in the surface of first member 10D with a plurality of recesses cut into the surface of first member 10D obliquely at angles different from each other to eliminate the low-strength direction in which the joint strength between the dissimilar materials joined to each other is low and forming the part of the second member to surround all peripheries of polygonal frustum to increase the joint strength between the dissimilar material.

Although the present invention has been described and illustrated in detail, it is clearly understood that the same is by way of illustration and example only and is not to be taken by way of limitation, the scope of the present invention being only limited by the appended claims.

## Claims

1. A method for joining dissimilar materials, comprising:
forming a first recess (101) and a second recess (111) by irradiating a surface of a first member (10A) with laser light, the first recess (101) and the second recess (111) being cut into the surface obliquely at angles different from each other; and
joining a second member (20A) to the surface of the first member (10A) with a part of the second member (20A) engaging with each of the first recess (101) and the second recess (111) by melting the part of the second member (20A) lower in melting point than the first member (10A) to cause the part of the second member (20A) to flow into each of the first recess (101) and the second recess (111) and solidifying the part of the second member (20A);
wherein:
at least one of the first recess (101) and second recess (111) is formed in a linear shape in the surface, each of the first and second recess (101, 111) having a tip, and a joining part (141) is formed at the respective tips, in the cutting direction, of first recess (101) and second recess (111), the joining part (141) causing the first recess (101) and second recess (111) to communicate with each other;
**characterised in that**
the first recess (101) and the second recess (111) are formed so as to be spaced apart from each other relative to a virtual plane perpendicular to the surface of the first member (10A).

2. The method for joining dissimilar materials according to claim 1, wherein the first member (10A) is formed of a metal material, and the second member (20A) is formed of a resin material.

3. A joint of dissimilar materials, comprising:
a first member (10A) having a first recess (101) and a second recess (111) cut into a surface of the first member (10A) obliquely at angles different from each other;
and
a second member (20A) lower in melting point than the first member (10A) and joined to the surface of the first member (10A),
wherein:
the second member (20A) has a first projection (121) and a second projection (131), wherein the first projection (121) engages with the first recess (101) and the second projection (131) engages with the second recess (111);
at least one of the first recess (101) and second recess (111) is in a linear shape in the surface and each of the first and second recess (101, 111) having a tip; and
the first recess (101) and second recess (111) communicate with each other through a joining part (141) at their respective tips;
**characterised in that**
the first recess (101) and the second recess (111) are spaced apart from each other relative to a virtual plane perpendicular to the surface of the first member (10A).

## Patentansprüche

1. Verfahren zum Verbinden unterschiedlicher Materialien, umfassend:
Ausbilden einer ersten Aussparung (101) und einer zweiten Aussparung (111) durch Bestrahlen einer Oberfläche eines ersten Glieds (10A) mit Laserlicht, wobei die erste Aussparung (101) und die zweite Aussparung (111) schräg in die Oberfläche unter voneinander verschiedenen Winkeln eingeschnitten werden; und
Verbinden eines zweiten Glieds (20A) mit der Oberfläche des ersten Glieds (10A), wobei ein Teil des zweiten Glieds (20A) jeweils in die erste Aussparung (101) und die zweite Aussparung (111) eingreift durch Schmelzen des Teils des zweiten Glieds (20A), dessen Schmelzpunkt niedriger ist als der des ersten Glieds (10A), um zu verursachen, dass der Teil des zweiten Glieds (20A) sowohl in die erste Aussparung (101) als auch in die zweite Aussparung (111) fließt, und Verfestigen des Teil des zweiten Glieds (20A);
wobei:
mindestens eine der ersten Aussparung (101) und der zweiten Aussparung (111) in einer linearen Gestalt in der Oberfläche ausgebildet ist, wobei sowohl die erste als auch die zweite Aussparung (101, 111) eine Spitze aufweist, und ein Verbindungsteil (141) an den jeweiligen Spitzen in der Schneidrichtung der ersten Aussparung (101) und der zweiten Aussparung (111) ausgebildet ist, wobei das Verbindungsteil (141) verursacht, dass die erste Aussparung (101) und die zweite Aussparung (111) miteinander kommunizieren;
**dadurch gekennzeichnet, dass**
die erste Aussparung (101) und die zweite Aussparung (111) so ausgebildet sind, dass sie relativ zu einer virtuellen Ebene, die senkrecht zur Oberfläche des ersten Glieds (10A) steht, voneinander beabstandet sind.

2. Verfahren zum Verbinden unterschiedlicher Materialien nach Anspruch 1, wobei das erste Glied (10A) aus einem Metallmaterial ausgebildet ist und das zweite Glied (20A) aus einem Harzmaterial ausgebildet ist.

3. Verbindung unterschiedlicher Materialien, umfassend:
ein erstes Glied (10A), das eine erste Aussparung (101) und eine zweite Aussparung (111) aufweist, die schräg unter voneinander verschiedenen Winkeln in eine Oberfläche des ersten Glieds (10A) geschnitten sind; und
ein zweites Glied (20A), das einen niedrigeren Schmelzpunkt als das erste Glied (10A) aufweist und mit der Oberfläche des ersten Glieds (10A) verbunden ist,
wobei:
das zweite Glied (20A) einen ersten Vorsprung (121) und einen zweiten Vorsprung (131) aufweist, wobei der erste Vorsprung (121) in die erste Aussparung (101) eingreift und der zweite Vorsprung (131) in die zweite Aussparung (111) eingreift;
mindestens eine der ersten Aussparung (101) und der zweiten Aussparung (111) eine lineare Gestalt in der Oberfläche aufweist und jede der ersten und zweiten Aussparung (101, 111) eine Spitze aufweist; und
die erste Aussparung (101) und die zweite Aussparung (111) miteinander durch ein Verbindungsteil (141) an ihren jeweiligen Spitzen kommunizieren;
**dadurch gekennzeichnet, dass**
die erste Aussparung (101) und die zweite Aussparung (111) relativ zu einer virtuellen Ebene, die senkrecht zur Oberfläche des ersten Glieds (10A) steht, voneinander beabstandet sind.

## Revendications

1. Procédé d'assemblage de matériaux dissemblables, comprenant :
la formation d'un premier évidement (101) et d'un second évidement (111) par irradiation d'une surface d'un premier organe (10A) avec une lumière laser, le premier évidement (101) et le second évidement (111) étant découpés obliquement dans la surface à des angles différents l'un de l'autre ; et
l'assemblage d'un second organe (20A) à la surface du premier organe (10A) avec une partie du second organe (20A) en prise avec chacun du premier évidement (101) et du second évidement (111) en faisant fondre la partie du second organe (20A) à un point de fusion inférieur à celui du premier organe (10A) pour amener la partie du second organe (20A) à s'écouler dans chacun du premier évidement (101) et du second évidement (111) et en solidifiant la partie du second organe (20A) ;
dans lequel :
au moins l'un du premier évidement (101) et du second évidement (111) est formé en forme linéaire dans la surface, chacun du premier et du second évidement (101, 111) présentant une pointe, et une partie (141) d'assemblage est formée aux pointes respectives, dans la direction de coupe, du premier évidement (101) et du second évidement (111), la partie (141) d'assemblage entraînant la communication entre le premier évidement (101) et le second évidement (111) ;
**caractérisé en ce que**
le premier évidement (101) et le second évidement (111) sont formés de manière à être espacés les uns des autres par rapport à un plan virtuel perpendiculaire à la surface du premier organe (10A).

2. Procédé d'assemblage de matériaux dissemblables selon la revendication 1, dans lequel le premier organe (10A) est formé d'un matériau métallique, et le second organe (20A) est formé d'un matériau de résine.

3. Assemblage de matériaux dissemblables, comprenant :
un premier organe (10A) présentant un premier évidement (101) et un second évidement (111) découpés obliquement dans une surface du premier organe (10A) à des angles différents l'un de l'autre ; et
un second organe (20A) présentant un point de fusion inférieur au premier organe (10A) et assemblé à la surface du premier organe (10A),
dans lequel :
le second organe (20A) présente une première saillie (121) et une seconde saillie (131), dans lequel la première saillie (121) vient en prise avec le premier évidement (101) et la seconde saillie (131) vient en prise avec le second évidement (111) ;
au moins l'un du premier évidement (101) et du second évidement (111) est de forme linéaire dans la surface et chacun des premier et second évidements (101, 111) présente une pointe ; et
le premier évidement (101) et le second évidement (111) communiquent l'un avec l'autre à travers une partie (141) d'assemblage à leurs pointes respectives ; **caractérisé en ce que**
le premier évidement (101) et le second évidement (111) sont espacés l'un de l'autre par rapport à un plan virtuel perpendiculaire à la surface du premier organe (10A).
